# EUROPEAN PATENT SPECIFICATION

(11) **EP 4 458 581 B1**
(45) Date of publication and mention of the grant of the patent: **15.04.2026**
(21) Application number: 22926119.3
(22) Date of filing: 27.12.2022
(51) Int. Cl.: B33Y 30/00, B33Y 50/00, B33Y 50/02, B23K 9/032, B23K 9/04, B23K 9/095, B23K 31/00

(54) **LEARNING DEVICE, DEFECT DETERMINATION APPARATUS, LEARNING METHOD, DEFECT DETERMINATION METHOD, WELDING CONTROL DEVICE, AND WELDING DEVICE**
LERNVORRICHTUNG, DEFEKTBESTIMMUNGSVORRICHTUNG, LERNVERFAHREN, DEFEKTBESTIMMUNGSVERFAHREN, SCHWEISSSTEUERUNGSVORRICHTUNG UND SCHWEISSVORRICHTUNG
DISPOSITIF D'APPRENTISSAGE, APPAREIL DE DÉTERMINATION DE DÉFAUT, PROCÉDÉ D'APPRENTISSAGE, PROCÉDÉ DE DÉTERMINATION DE DÉFAUT, DISPOSITIF DE COMMANDE DE SOUDAGE ET DISPOSITIF DE SOUDAGE

(30) Priority: 14.02.2022 JP 2022020686
(43) Date of publication of application: 06.11.2024
(73) Proprietor: KABUSHIKI KAISHA KOBE SEIKO SHO (KOBE STEEL, LTD.), Hyogo 651-8585 (JP)
(72) Inventor: HUANG, Shuo, Nishi-ku, Kobe-shi, Hyogo 651-2271 (JP); TSUBAKI, Shota, Nishi-ku, Kobe-shi, Hyogo 651-2271 (JP)
(74) Representative: Müller-Boré & Partner Patentanwälte PartG mbB
(86) International application number: PCT/JP2022/048297
(87) International publication number: WO 2023/153105

(56) References cited:
- WO-A1-2020/129618
- WO-A1-2022/019013
- WO-A1-2022/019120
- JP-A- 2021 009 126

## Description

### TECHNICAL FIELD

The present invention relates to a learning device, a defect determination device, a learning method, a defect determination method, a welding control device, and a welding device.

### BACKGROUND ART

In arc welding, a technique for detecting a defect occurring in a welded structure and determining whether appropriate welding is performed is known. For example, PTL 1 discloses a technique for determining whether a welding state is good or bad by capturing an image of a state of a molten pool with a visual sensor through a filter. In addition, PTL 1 also describes that a welding current, a welding voltage, and a wire feeding speed are also measured at the same time as the image is captured by the visual sensor.

### CITATION LIST

### PATENT LITERATURE

Patent Literature 1: JP2008-110388A

WO 2022/019120 A1 discloses a learning device that learns a defect size of an unwelded defect occurring inside an additively manufactured object in which a plurality of beads are stacked in layers on a base metal, and generates an estimation model that outputs the defect size according to input information.

### SUMMARY OF INVENTION

### TECHNICAL PROBLEM

Incidentally, as a means for inspecting the quality of a manufactured object built by depositing beads in a non-contact manner, for example, there is an inspection means using ultrasonic flaw detection. However, in the ultrasonic flaw detection, a probe is brought into contact with a surface of the manufactured object, and thus it is difficult to apply the probe until after a surface of the manufactured object is cut, and there is a possibility that reflected waves of ultrasonic waves cannot be detected smoothly for a complex manufactured object.

A non-contact inspection means using an X-ray CT apparatus is also considered, but the non-contact inspection means is not necessarily practical because a size of an object to be inspected is limited by the X-ray CT apparatus and the X-ray CT apparatus itself is expensive.

Therefore, an object of the present invention is to provide a learning device, a defect determination device, a learning method, a defect determination method, a welding control device, and a welding device that can accurately predict a defect size and reduce occurrence of defects in advance.

### SOLUTION TO PROBLEM

The present invention has the following configuration.
(1) A learning device that learns a defect size of an unwelded defect occurring inside an additively manufactured object in which a plurality of beads are stacked in layers on a base metal, and generates an estimation model that outputs the defect size according to input information, the learning device including:
   an information acquisition unit configured to acquire information on a welding condition when the beads are deposited, a dimension related to a narrow portion forming a valley portion in a surface shape of the additively manufactured object before the beads are deposited, a positional relation between the narrow portion and a target position of the bead, and the defect size of the unwelded defect; and
   a learning unit configured to generate the estimation model by learning a relation between the welding condition, the dimension related to the narrow portion and the positional relation, and the defect size, in which
   the dimension related to the narrow portion includes at least one of a bottom width of the valley portion, an opening width representing an interval between top portions on both sides of the valley portion, both sides constituting the valley portion, and a valley depth from the top portion to a bottom of the valley portion.
(2) A defect determination device including:
   the learning device according to (1); and
   a determination unit configured to input, to the estimation model, information on a welding plan including at least dimensional information on the narrow portion and the positional relation, and to compare an estimated value of the defect size of the unwelded defect output from the estimation model with a reference value serving as a predetermined allowable limit.
(3) A learning method that learns a defect size of an unwelded defect occurring inside an additively manufactured object in which a plurality of beads are stacked in layers on a base metal, and generates an estimation model that outputs the defect size according to input information, the learning method including:
   a step of acquiring information on a welding condition when the beads are deposited, a dimension related to a narrow portion forming a valley portion in a surface shape of the additively manufactured object before the beads are deposited, a positional relation between the narrow portion and a target position of the bead, and the defect size of the unwelded defect; and
   a step of generating the estimation model by learning a relation between the welding condition, the dimension related to the narrow portion and the positional relation, and the defect size, in which
   the dimension related to the narrow portion includes at least one of a bottom width of the valley portion, an opening width representing an interval between top portions on both sides of the valley portion, both sides constituting the valley portion, and a valley depth from the top portion to a bottom of the valley portion.
(4) A defect determination method, including:
   inputting, to the estimation model generated by using the learning method according to (3), information on a welding plan including at least dimensional information on the narrow portion and the positional relation;
   comparing an estimated value of a defect size of the unwelded defect output from the estimation model with a reference value serving as a predetermined allowable limit; and
   determining that the unwelded defect occurs when the estimated value exceeds the reference value.
(5) A welding control device including:
   the defect determination device according to (2); and
   a control unit configured to execute arc welding according to a result output from the defect determination device.
(6) A welding device including:
   the welding control device according to (5); and
   a welding robot configured to execute arc welding.

### ADVANTAGEOUS EFFECTS OF INVENTION

According to the present invention, it is possible to accurately predict the defect size and reduce occurrence of defects in advance.

### BRIEF DESCRIPTION OF DRAWINGS

FIG. 1 is an overall configuration diagram of a welding system.
FIG. 2 is a schematic diagram illustrating a welding torch, a shape detection unit, and a bead formation trajectory.
FIG. 3 is a schematic functional block diagram of a defect determination device.
FIG. 4 is a diagram illustrating a state in which beads are formed in a narrow portion by the welding torch.
FIG. 5 is a diagram illustrating features in a cross section of existing beads orthogonal to a bead formation direction.
FIG. 6 is a diagram illustrating a state in which an interval between the existing beads illustrated in FIG. 5 is changed.
FIG. 7 is a diagram illustrating a state in which the interval between the existing beads illustrated in FIG. 5 is changed.
FIG. 8 is a cross-sectional view of an additive specimen in which a defect is formed.
FIG. 9 is a cross-sectional view of an additive specimen in which a defect is formed.
FIG. 10 is a flowchart illustrating a procedure for determining welding conditions.
FIG. 11 is a graph illustrating a relation between an actual measurement value and a predicted value of a defect size.

### DESCRIPTION OF EMBODIMENTS

Hereinafter, a configuration example of the present invention will be described in detail with reference to the drawings. Here, additive manufacturing in which an additively manufactured object is built by depositing beads will be described as an example, and the present invention can also be applied to general welding such as fillet welding and butt welding.

### <Configuration of Welding System>

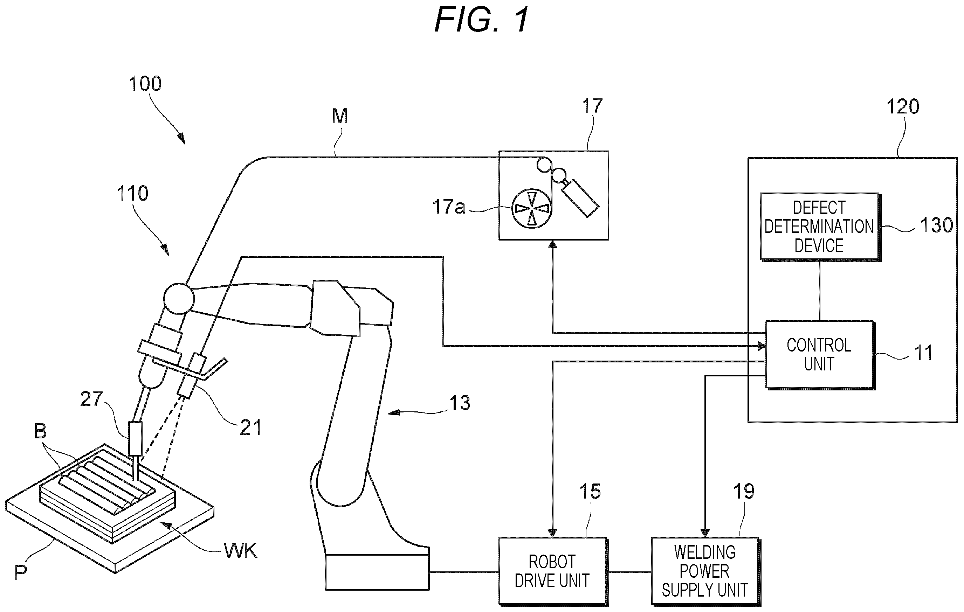

FIG. 1 is an overall configuration diagram of a welding system.

A welding system 100 includes a welding device 110 and a welding control device 120. The welding control device 120 includes a control unit 11 and a defect determination device 130.

### (Welding Device)

First, the configuration of the welding device 110 will be described.

The welding device 110 includes a welding robot 13, a robot drive unit 15, a filler metal supply unit 17, a welding power supply unit 19, and a shape detection unit 21. The welding robot 13, the robot drive unit 15, the filler metal supply unit 17, the welding power supply unit 19, and the shape detection unit 21 are connected to the control unit 11 of the welding control device 120.

The welding robot 13 is an articulated robot, and a welding torch 27 is attached to a tip end shaft thereof. The robot drive unit 15 outputs a command to drive the welding robot 13, and freely sets a position and a posture of the welding torch 27 three-dimensionally within a range of degrees of freedom of a robot arm. In addition, a continuously supplied filler metal (welding wire) M is supported at a tip end of the welding torch 27.

The welding torch 27 is a gas metal arc welding torch that has a shield nozzle (not illustrated) and is supplied with shield gas from the shield nozzle. An arc welding method may be a consumable electrode type such as shielded arc welding or carbon dioxide gas arc welding, or a non-consumable electrode type such as TIG welding or plasma arc welding, and is appropriately selected according to a manufactured object (structure) to be manufactured. For example, in the case of the consumable electrode type, a contact tip is disposed inside the shield nozzle, and the filler metal M to which a melting current is supplied is held by the contact tip. The welding torch 27 generates an arc from a tip end of the filler metal M in a shield gas atmosphere while holding the filler metal M.

The filler metal supply unit 17 includes a reel 17a around which the filler metal M is wound. The filler metal M is fed from the filler metal supply unit 17 to a feeding mechanism (not illustrated) attached to the robot arm or the like, and is fed to the welding torch 27 while being fed forward and backward by the feeding mechanism as necessary.

Any commercially available welding wire can be used as the filler metal M. For example, a welding wire specified by solid wires for MAG and MIG welding of mild steel, high tensile strength steel, and low temperature service steel (JIS Z 3312), flux-cored wires for arc welding of mild steel, high tensile strength steel, and low temperature service steel (JIS Z 3313), and the like can be used. Further, it is also possible to use the filler metal M such as aluminum, an aluminum alloy, nickel, or a nickel-based alloy in accordance with desired properties.

The welding power supply unit 19 supplies, to the welding torch 27, a welding current and a welding voltage for generating an arc from the tip end of the torch.

The shape detection unit 21 is provided on or in the vicinity of the tip end shaft of the welding robot 13 and sets the vicinity of the tip end of the welding torch 27 as a measurement region. The shape detection unit 21 may be another detection unit provided at a position different from that of the welding torch 27.

The shape detection unit 21 of this configuration is moved together with the welding torch 27 by the driving of the welding robot 13 and measures shapes of beads B and a portion serving as a base when the beads B are formed. As the shape detection unit 21, for example, a laser sensor that acquires reflected light of irradiated laser light as height data can be used. In addition, other detection units such as a camera for three-dimensional shape measurement may be used as the shape detection unit 21.

According to the welding device 110 having the above-described configuration, a manufacturing program corresponding to the manufactured object to be manufactured is transmitted from the control unit 11 to the robot drive unit 15. The manufacturing program includes a large number of command codes, and is created based on an appropriate algorithm according to various conditions such as shape data (CAD data or the like), a material, and a heat input amount of the manufactured object.

The robot drive unit 15 executes the received manufacturing program, drives the welding robot 13, the filler metal supply unit 17, the welding power supply unit 19, and the like, and forms the beads B according to the manufacturing program. That is, the robot drive unit 15 drives the welding robot 13 to move the welding torch 27 along a trajectory (bead formation trajectory) of the welding torch 27, which is set in the manufacturing program. At the same time, the filler metal supply unit 17 and the welding power supply unit 19 are driven according to set welding conditions, and the filler metal M at the tip end of the welding torch 27 is melted and solidified by the arc. Accordingly, the beads B are formed on a base plate P, which is a base metal, along the trajectory of the welding torch 27. The beads B are formed adjacent to one another to form a bead layer including a plurality of beads B. By depositing a next bead layer on the bead layer, a manufactured object WK having a desired three-dimensional shape is built.

The welding control device 120 is not illustrated and is implemented by a computer device including a processor such as a CPU, a memory such as a ROM and a RAM, and a storage unit such as a hard disk drive (HD) and a solid state drive (SSD). Each component of the welding control device 120 described above operates according to a command from the CPU and performs respective functions. In addition, the welding control device 120 may be disposed away from the welding device 110 and may be connected to the welding device 110 from a remote place via a communication unit such as a network.

The control unit 11 constituting the welding control device 120 has a function of collectively controlling the robot drive unit 15, the filler metal supply unit 17, the welding power supply unit 19, and the shape detection unit 21 illustrated in FIG. 1. The control unit 11 executes a drive program prepared in advance or a drive program created under desired conditions to drive each unit such as the welding robot 13. Accordingly, the welding torch 27 is moved in accordance with the drive program, and a plurality of layers of beads B are deposited on the base plate P based on a created welding plan, whereby a manufactured object WK having a multilayer structure is built.

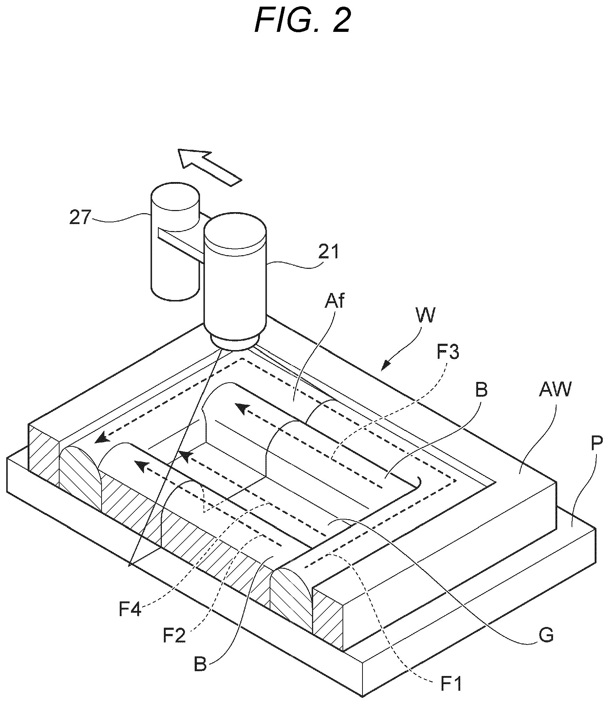

FIG. 2 is a schematic diagram illustrating the welding torch 27, the shape detection unit 21, and the bead formation trajectory of the beads B.

The beads B are sequentially formed by the welding torch 27 moving on the base plate P along the bead formation trajectory created in advance. In addition, at the same time as the welding torch 27 is moved, the shape detection unit 21 measures surface shapes of the existing beads B and a bead formation planned surface G. The shape detection unit 21 outputs the surface shapes of the beads B and the bead formation planned surface G (these are collectively referred to as a shape profile) to the welding control device 120.

It is preferable to measure the shape profile at the same time as the beads B are formed. In this case, the shape detection unit 21 may be disposed behind the welding torch 27 in a movement direction. Accordingly, while the beads B are formed by moving the welding torch 27, the shape of the formed beads B can be efficiently measured along a movement path, and thus a takt time can be shortened. The measurement of the shape profile may be performed at a time different from a time when the beads B are formed or may be performed at a desired timing depending on various conditions. Hereinafter, a bead that is to be formed before being formed will also be referred to as a "new bead", and a bead that has already been formed will also be referred to as an "existing bead".

The manufactured object WK shown here includes a frame-shaped wall portion Aw formed by the beads B and a filling portion Af that fills a region surrounded by the wall portion Aw with the beads B. The filling portion Af is formed after the wall portion Aw is formed. That is, after the wall portion Aw is formed, the beads B, which become the filling portion Af, are formed inside the wall portion Aw along bead formation trajectories F1 to F3 shown by dotted lines. Thereafter, the bead B is formed along a bead formation trajectory F4. An order of formation of the beads B within the filling portion Af may be any order.

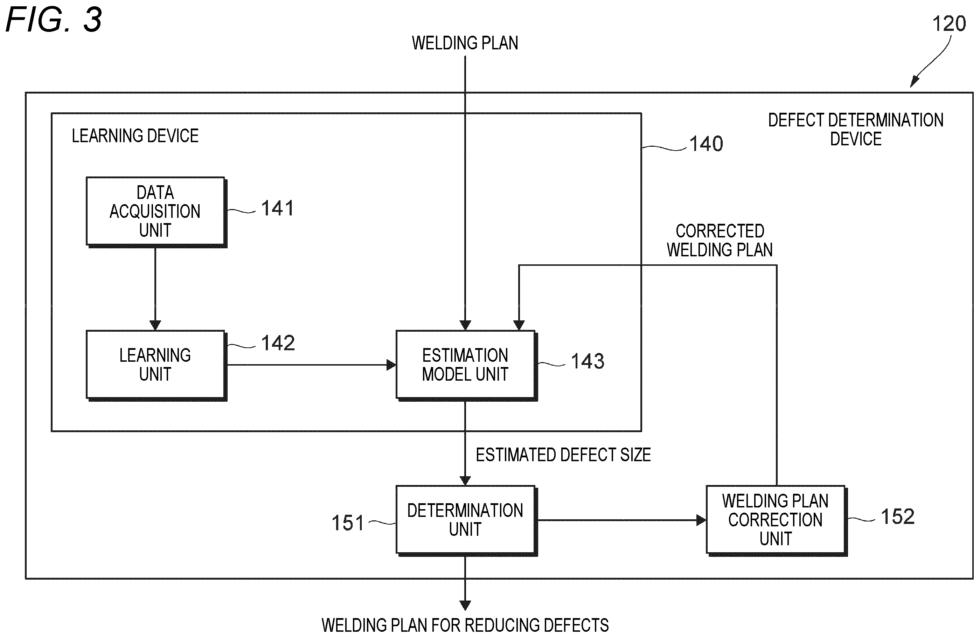

FIG. 3 is a schematic functional block diagram of the defect determination device 130.

The defect determination device 130 constituting the welding control device 120 includes a learning device 140, a determination unit 151, and a welding plan correction unit 152. The learning device 140 includes a data acquisition unit (information acquisition unit) 141, a learning unit 142, and an estimation model unit (estimation model) 143. The determination unit 151 and the welding plan correction unit 152 are connected to the estimation model unit 143 of the learning device 140.

The learning device 140 learns a defect size of an unwelded defect occurring inside an additively manufactured object in which a plurality of beads B are stacked in layers on the base plate P, and generates an estimation model that outputs the defect size according to input information. The data acquisition unit 141 acquires information on welding conditions when the beads B are deposited, a dimension related to a narrow portion forming a valley portion in a surface shape of the additively manufactured object before the beads B are deposited, a positional relation between the narrow portion and a target position of the bead B, and the defect size of the unwelded defect. Examples of the positional relation between the narrow portion and the target position of the bead B include, but are not limited to, a difference distance between a representative position of a center of the narrow portion or the like and a target position of the bead B to be formed next. The learning unit 142 generates the estimation model by learning a relation between the welding conditions, the dimension related to the narrow portion and the positional relation, and the defect size. The estimation model unit 143 registers the estimation model generated by the learning unit 142.

The determination unit 151 inputs, to the estimation model registered in the estimation model unit 143, information on a welding plan including dimensional information on the narrow portion and the positional relation. An estimated value of the defect size of the unwelded defect output from the estimation model unit 143 is compared with a reference value serving as a predetermined allowable limit.

The welding plan correction unit 152 creates a corrected welding plan by correcting at least one of the welding conditions and the positional relation when the determination unit 151 determines that the estimated value of the defect size exceeds the reference value. The corrected welding plan is transmitted to the estimation model unit 143.

### <Generation of Training Data>

Next, a process of generating training data will be described.

### (Preparation of Training Data)

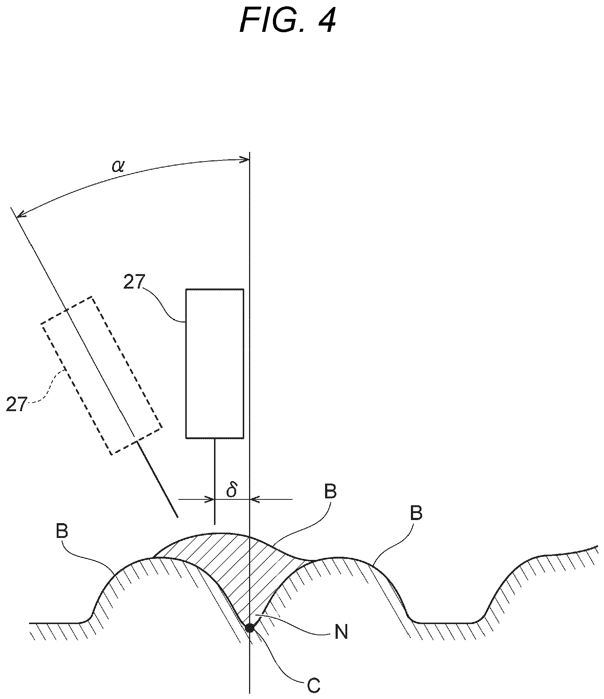

FIG. 4 is a diagram illustrating a state in which the beads B are formed in a narrow portion N by the welding torch 27.

First, training data to be acquired by the data acquisition unit 141 of the learning device 140 is prepared. Specifically, as illustrated in FIG. 4, as the training data, welding conditions of the bead B with which the narrow portion N is filled, features of a shape of the narrow portion N between the beads B on a front layer, and a horizontal distance δ between the welding torch 27 and the narrow portion N are prepared. Examples of the welding conditions of the bead B with which the narrow portion N is filled include a welding voltage, a welding current, a travel speed, a feeding speed of the filler metal M, a torch angle α which is an inclination angle of the welding torch 27, a volume of the bead B, and a cross-sectional area of a cross section orthogonal to a longitudinal direction of the bead B, which are set when the beads B are deposited. Here, the torch angle α is an inclination angle inclined in a direction orthogonal to the longitudinal direction in the cross section orthogonal to the longitudinal direction of the bead B, and may be an inclination angle (torch advancing angle or torch retreating angle) inclined in the longitudinal direction in a cross section parallel to the longitudinal direction of the bead B.

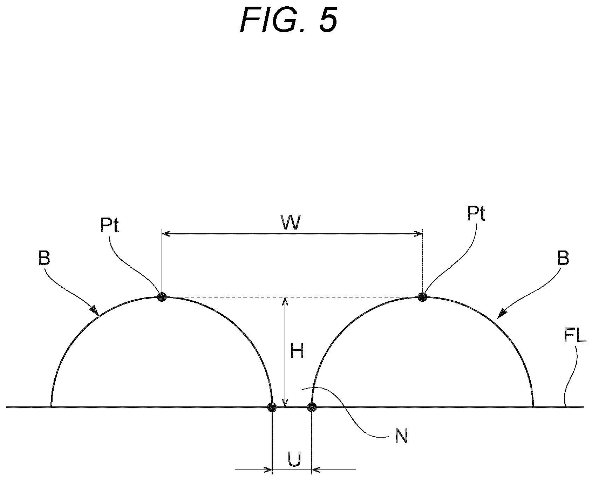

FIG. 5 is a diagram illustrating an example of features W, U, and H in a cross section of the existing beads B orthogonal to a bead formation direction.

The narrow portion N between the beads B on the front layer refers to a portion formed in a valley shape between existing beads on a base plate or a lower layer, and at least three features of a bead interval W, a bottom portion interval U, and an average depth H are extracted as the features of the shape of the narrow portion N. That is, when a pair of existing beads B adjacent to each other are formed on a base surface FL representing a surface of the existing beads on the base plate or the lower layer, in addition to the bottom portion interval U and the bead interval W, the average depth H from the base surface FL to a top portion Pt of each bead B is defined as a feature. The average depth H corresponds to a valley depth to a valley bottom of the valley portion formed by the pair of existing beads B in a depositing direction.

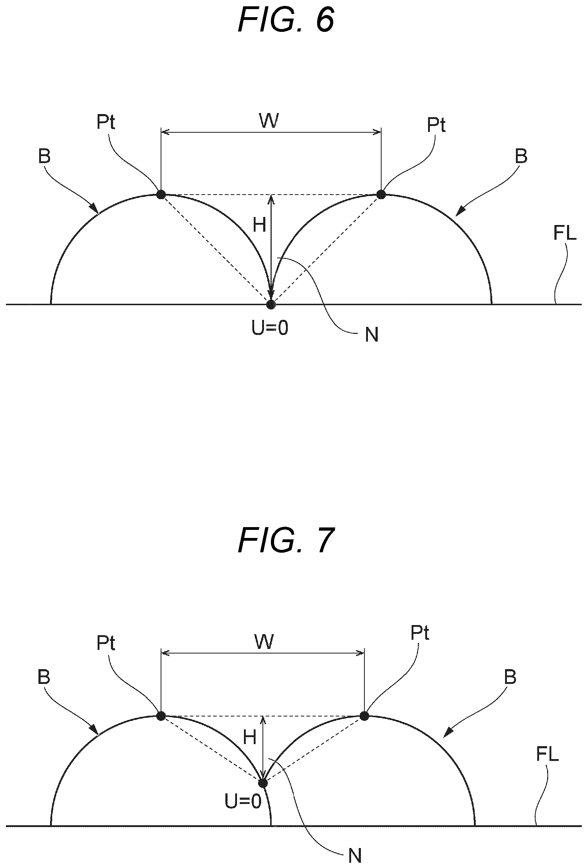

FIGS. 6 and 7 are diagrams illustrating a state in which the interval between the existing beads B illustrated in FIG. 5 is changed.

As illustrated in FIG. 6, when the existing beads B approach each other to positions at which the existing beads B are in contact with each other, the bottom portion interval U becomes 0, and the average depth H becomes a valley depth between beads represented by a triangle shown by dotted lines. Furthermore, as illustrated in FIG. 7, when the existing beads B overlap each other, the bottom portion interval U is 0, and the average depth H is smaller than those in the cases illustrated in FIGS. 5 and 6. In this way, by including the combination of the bottom portion interval U, the bead interval W, and the average depth H as the features, a shape of the valley portion can be easily specified.

The features W, U, and H may be calculated after applying a model function that simulates a shape of a bead to a shape profile obtained by actual measurement. A sensor that measures the shape of the narrow portion N is preferably a non-contact type sensor as in the shape detection unit 21 of the present example, and more preferably a sensor that is attached in the vicinity of the welding torch 27 and measures the shape of the narrow portion N while scanning a surface of the bead B.

The horizontal distance δ between the welding torch 27 and the narrow portion N is calculated as a difference distance between a representative position of the narrow portion N and a center position at which a bead B is placed next. The representative position of the narrow portion N may be, for example, a position at which the depth is minimum or an intermediate point of a portion evaluated by the feature U.

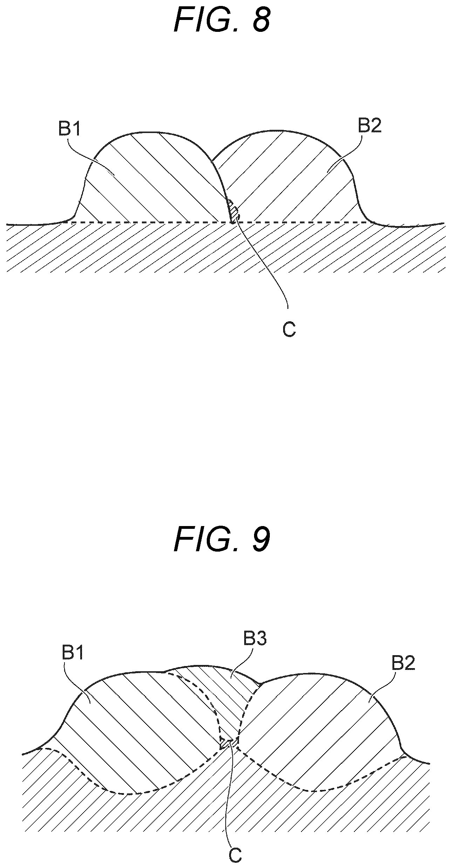

FIGS. 8 and 9 are cross-sectional views of an additive specimen in which a defect C is formed.

As data on the defect size, data obtained by directly observing and measuring a cut surface after the additive specimen of the beads illustrated in FIGS. 8 and 9 are cut can be used. In addition, the data on the defect size may be data obtained by observing the additive specimen of the beads with a CT apparatus and determining a defect size.

Here, when the beads are formed, a recess portion is likely to be formed in root portions of side edge portions of the beads, and a foreign matter is likely to be accumulated in the root portions of the side edge portions. Therefore, as illustrated in FIG. 8, when a bead B2 is formed adjacent to a bead B1 so as to overlap a side edge portion of the bead B1, an arc does not sufficiently come into contact with a root portion of the side edge portion of the bead B1, and thus a slight gap may be generated to cause the defect (unwelded defect) C. In addition, as illustrated in FIG. 9, when a pair of beads B1 and B2 are formed with a gap, and a bead B3 is formed so as to fill a valley portion between the beads B1 and B2, an arc also does not sufficiently come into contact with a bottom portion, and thus the unwelded defect C may be generated in a recess portion of root portions of side edge portions of the existing beads B1 and B2.

The defect size is a size including the cross-sectional area or a length in the cross section orthogonal to the longitudinal direction of the bead B, and includes, for example, indices such as a diameter when a shape of the defect C is approximated by a true circle, a cross-sectional area of the approximated circle, an area of the defect C to be observed, and a long axis length and a short axis length when the shape of the defect is approximated by an ellipse.

### (Generation of Estimation Model)

When the prepared training data is input to the data acquisition unit 141 of the learning device 140, the learning unit 142 generates an estimation model including a relation between the training data and the defect size based on the training data. The estimation model generated by the learning unit 142 is transmitted to the estimation model unit 143 and registered in the estimation model unit 143. Examples of the means of generating the estimation model in the learning unit 142 include well-known means such as a decision tree, linear regression, random forest, support vector machine, Gaussian process regression, and neural network. At this time, in addition to the defect size, a probability of occurrence of a defect having a specific size, an occurrence density of defects occurring in a specific region (area or volume), and the like may also be learned.

### <Determination of Welding Conditions>

Next, a process of determining welding conditions in the welding control device 120 will be described.

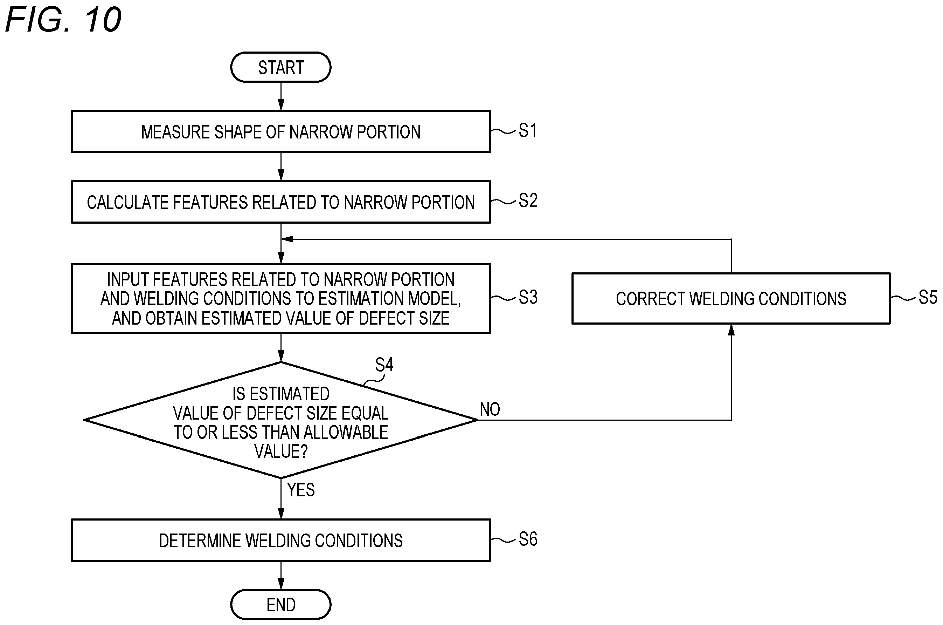

FIG. 10 is a flowchart illustrating a procedure for determining the welding conditions.

By moving the welding torch 27 along the bead formation trajectory created in advance, the surface shapes of the existing beads B and the bead formation planned surface G are measured by the shape detection unit 21 provided in parallel to the welding torch 27. Accordingly, the shape of the narrow portion N on the bead formation planned surface G is measured (S1).

The features W, U, and H related to the narrow portion N are calculated based on the measured shape of the narrow portion N on the bead formation planned surface G (S2). The features W, U, and H may be calculated by preparing in advance a model function that simulates the narrow portion N and fitting the same. A smoothing process or the like may be performed on the shape profile obtained by the measurement before fitting the shape profile with the model function.

The calculated features W, U, and H, welding conditions of the beads B to be formed on the bead formation planned surface G, and information on a target position of the welding torch 27 are input to the estimation model unit 143, and an estimated value of the defect size is obtained (S3).

The determination unit 151 compares the estimated value of the defect size obtained by the estimation model unit 143 with a preset allowable value and determines whether the estimated value is equal to or less than the allowable value (S4). The allowable value is a value of an allowable limit size which is an allowable defect size. The allowable limit size may be set for each manufactured object to be built or each material to be used for building.

When the determination unit 151 determines that the estimated value of the defect size exceeds the allowable value (S4: No), the welding plan correction unit 152 searches for a condition under which the defect size is reduced to the allowable limit size or less (S5). For example, the welding plan correction unit 152 corrects a welding plan such as the welding conditions of the beads B to be formed on the bead formation planned surface G and the target position of the welding torch 27, and transmits the corrected welding plan to the estimation model unit 143. Accordingly, the estimated value of the defect size is obtained again (S3), and the estimated value of the defect size obtained again and the allowable value are compared and determined by the determination unit 151. The correction of the welding plan by the welding plan correction unit 152, the estimation of the defect size by the estimation model unit 143, and the determination by the determination unit 151 are repeated.

When the determination unit 151 determines that the estimated value of the defect size is equal to or less than the allowable value (S4: Yes), the welding conditions of the beads B to be formed on the bead formation planned surface G, the target position of the welding torch 27, and the like, which are input to the estimation model unit 143 for obtaining the estimated value, are determined as the welding plan (S6). Thereafter, the beads B are formed on the bead formation planned surface G according to the welding plan.

According to the welding system 100 described above, the estimation model is generated by learning a relation between the welding conditions, the dimension related to the narrow portion and the positional relation, and the defect size. At this time, as a dimension related to the narrow portion N, at least one of the bottom portion interval (bottom width) U of the valley portion of the narrow portion N serving as a base, the opening width (bead interval) W representing an interval between top portions on both sides of the valley portion, both sides constituting the valley portion, and a valley depth H from the top portion to a bottom of the valley portion is used. In this way, by performing machine learning based on the shape of the narrow portion N serving as a base and the conditions of the beads B to be deposited thereon, the defect size can also be accurately predicted when the number of data is relatively small.

The defect size can be accurately predicted by generating the estimation model using the welding conditions including at least one of the feeding speed of the filler metal M, the travel speed, the welding current, the welding voltage, the torch angle α of the welding torch 27, the volume of the bead B, and the cross-sectional area of the cross-section orthogonal to the longitudinal direction of the bead B. In particular, by learning an index related to the volume or a heat input amount of the bead B, a relation of whether the narrow portion N on the front layer is completely filled can be incorporated into machine learning.

Moreover, by comparing an estimated value of the defect size of the defect C with a reference value serving as a predetermined allowable limit, when the occurrence of the defect C is predicted, it is also possible to determine whether the estimated defect C is a harmless defect or a harmful defect and to reduce unnecessary defect handling.

By repeating the correction of the welding plan, the calculation of the estimated value, and the determination of the estimated value, the welding conditions suitable for reducing the defect C and the target position of the welding torch 27 can be extracted.

Accordingly, the arc welding can be executed according to the welding conditions suitable for reducing the defect C and the target position of the welding torch, and the manufactured object can be built while reducing the defect C such as an unwelded defect in the narrow portion N.

In the learning device 140 having the above-described configuration, the learning unit 142 may register, in the estimation model unit 143, a variance of the defect size in addition to the defect size, and the estimation model unit 143 may output the defect size corresponding to the input information and a variance value thereof, according to the input information.

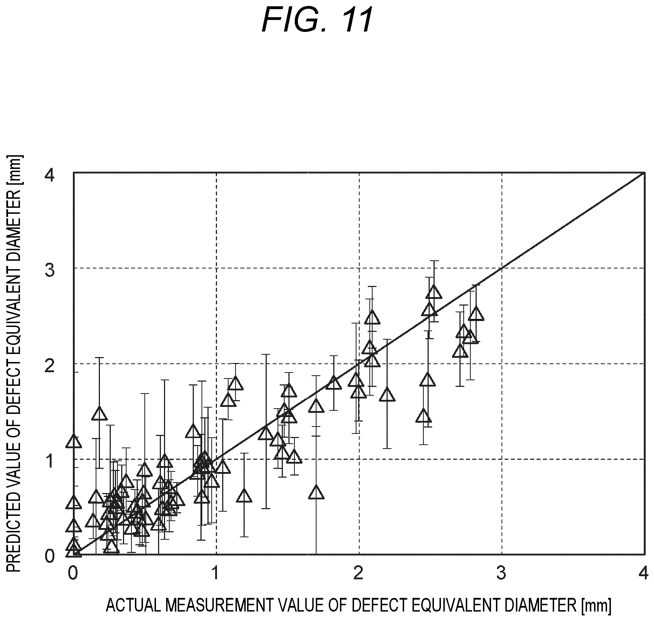

FIG. 11 is a graph illustrating a relation between an actual measurement value and a predicted value of the defect size. In FIG. 11, the defect size is a diameter when a shape of a defect is approximated by a true circle. The predicted value of the defect size (predicted value of defect equivalent diameter) varies to some extent with respect to the actual measurement value of the defect size (actual measurement value of defect equivalent diameter), and the variation decreases in a range of a depth of the narrow portion N of 2 mm to 4 mm. That is, the defect size can be predicted with high accuracy particularly when the depth of the narrow portion N is 2 mm to 4 mm.

The learning unit 142 registers, in the estimation model unit 143, the variance of the defect size in addition to the defect size, and the estimation model unit 143 can output the defect size and the variance value thereof, and thus it is possible to predict the defect C by taking into account variations occurring depending on the defect size.

As described above, the present invention is not limited to the above-described embodiments, and it is defined within the scope of the appended set of claims

As described above, the following matters are disclosed in the present specification.
(1) A learning device that learns a defect size of an unwelded defect occurring inside an additively manufactured object in which a plurality of beads are stacked in layers on a base metal, and generates an estimation model that outputs the defect size according to input information, the learning device including:
   an information acquisition unit configured to acquire information on a welding condition when the beads are deposited, a dimension related to a narrow portion forming a valley portion in a surface shape of the additively manufactured object before the beads are deposited, a positional relation between the narrow portion and a target position of the bead, and the defect size of the unwelded defect; and
   a learning unit configured to generate the estimation model by learning a relation between the welding condition, the dimension related to the narrow portion and the positional relation, and the defect size, in which
   the dimension related to the narrow portion includes at least one of a bottom width of the valley portion, an opening width representing an interval between top portions on both sides of the valley portion, both sides constituting the valley portion, and a valley depth from the top portion to a bottom of the valley portion.
   According to the learning device, the estimation model is generated by learning the relation between the welding condition, the dimension related to the narrow portion and the positional relation, and the defect size. At this time, as the dimension related to the narrow portion, at least one of the bottom width of the valley portion of the narrow portion serving as a base, the opening width representing the interval between the top portions on both sides of the valley portion, both sides constituting the valley portion, and the valley depth from the top portion to the bottom of the valley portion is used. In this way, by performing machine learning based on a shape of the narrow portion serving as a base and the condition of the beads to be deposited thereon, the defect size can also be accurately predicted when the number of data is relatively small.
(2) The learning device according to (1), in which the welding condition includes at least one of a feeding speed of a welding wire, a travel speed, a welding current, a welding voltage, a torch angle of a welding torch, a volume of the bead, and a cross-sectional area of a cross section orthogonal to a longitudinal direction of the bead.
   According to the learning device, the defect size can be accurately predicted by generating the estimation model using the welding condition including at least one of the feeding speed of the welding wire, the travel speed, the welding current, the welding voltage, the torch angle of the welding torch, the volume of the bead, and the cross-sectional area of the cross-section orthogonal to the longitudinal direction of the bead. In particular, by learning an index related to the volume or a heat input amount of the bead, a relation of whether a narrow portion on a front layer is completely filled can be incorporated into machine learning.
(3) The learning device according to (1) or (2), in which the positional relation includes a difference distance between a representative position of the narrow portion and a target position of the bead to be formed next.
   According to the learning device, a highly accurate estimation model can be generated using the positional relation including the difference distance between the representative position of the narrow portion and the target position of the bead to be formed next.
(4) The learning device according to any one of (1) to (3), in which the defect size includes the cross-sectional area or a length of the cross section orthogonal to the longitudinal direction of the bead.
   According to the learning device, a highly accurate estimation model can be generated using the defect size including the cross-sectional area or the length of the cross section orthogonal to the longitudinal direction of the bead.
(5) The learning device according to any one of (1) to (4), in which the learning unit registers, in the estimation model, a variance of the defect size in addition to the welding condition, the dimension related to the narrow portion, and the defect size corresponding to the positional relation, and
   the estimation model is capable of outputting the defect size and a variance value thereof corresponding to the input information, according to the input information.
   According to the learning device, a reliability of the estimation can be determined by outputting the variance value together with the defect size, and a range of an estimated value that is practically reliable can be determined based on the reliability.
(6) A defect determination device including:
   the learning device according to any one of (1) to (5); and
   a determination unit configured to input, to the estimation model, information on a welding plan including at least dimensional information on the narrow portion and the positional relation, and to compare an estimated value of the defect size of the unwelded defect output from the estimation model with a reference value serving as a predetermined allowable limit.
   According to the defect determination device, by providing the determination unit that compares the estimated value of the defect size of the unwelded defect with the reference value serving as a predetermined allowable limit, when the occurrence of the defect is predicted, it is also possible to determine whether the estimated defect is a harmless defect or a harmful defect and to reduce unnecessary defect handling.
(7) The defect determination device according to (6), further including:
   a welding plan correction unit configured to create a corrected welding plan by correcting at least one of the welding condition and the positional relation when the determination unit determines that the estimated value exceeds the reference value, in which
   the welding plan correction unit repeats the correction of the welding plan until the estimated value of the defect size according to information on the corrected welding plan output from the estimation model becomes equal to or less than the reference value.
   According to the defect determination device, by repeating the correction of the welding plan, the calculation of the estimated value, and the determination of the estimated value, the welding condition suitable for reducing the unwelded defect and the target position of the welding torch can be extracted.
(8) A learning method that learns a defect size of an unwelded defect occurring inside an additively manufactured object in which a plurality of beads are stacked in layers on a base metal, and generates an estimation model that outputs the defect size according to input information, the learning method including:
   a step of acquiring information on a welding condition when the beads are deposited, a dimension related to a narrow portion forming a valley portion in a surface shape of the additively manufactured object before the beads are deposited, a positional relation between the narrow portion and a target position of the bead, and the defect size of the unwelded defect; and
   a step of generating the estimation model by learning a relation between the welding condition, the dimension related to the narrow portion and the positional relation, and the defect size, in which
   the dimension related to the narrow portion includes at least one of a bottom width of the valley portion, an opening width representing an interval between top portions on both sides of the valley portion, both sides constituting the valley portion, and a valley depth from the top portion to a bottom of the valley portion.
   According to the learning method, the estimation model is generated by learning the relation between the welding condition, the dimension related to the narrow portion and the positional relation, and the defect size. At this time, as the dimension related to the narrow portion, at least one of the bottom width of the valley portion of the narrow portion serving as a base, the opening width representing the interval between the top portions on both sides of the valley portion, both sides constituting the valley portion, and the valley depth from the top portion to the bottom of the valley portion is used. In this way, by performing machine learning based on a shape of the narrow portion serving as a base and the condition of the beads to be deposited thereon, the defect size can also be accurately predicted when the number of data is relatively small.
(9) A defect determination method, including:
   inputting, to the estimation model generated by using the learning method according to (8), information on a welding plan including at least dimensional information on the narrow portion and the positional relation;
   comparing an estimated value of a defect size of the unwelded defect output from the estimation model with a reference value serving as a predetermined allowable limit; and
   determining that the unwelded defect occurs when the estimated value exceeds the reference value.
   According to the defect determination method, by comparing the estimated value of the defect size of the unwelded defect with the reference value serving as a predetermined allowable limit, when the occurrence of the defect is predicted, it is also possible to determine whether the estimated defect is a harmless defect or a harmful defect and to reduce unnecessary defect handling.
(10) The defect determination method according to (9), further including:
   creating a corrected welding plan by correcting at least one of the welding condition and the positional relation when it is determined that the estimated value exceeds the reference value;
   inputting the corrected welding plan to the estimation model; and
   repeating the correction of the welding plan until the estimated value of the defect size according to information on the corrected welding plan output from the estimation model becomes equal to or less than the reference value.
   According to the defect determination method, by repeating the correction of the welding plan, the calculation of the estimated value, and the determination of the estimated value, the welding condition suitable for reducing the unwelded defect and the target position of the welding torch can be extracted.
(11) A welding control device including:
   the defect determination device according to (6) or (7); and
   a control unit configured to execute arc welding according to a result output from the defect determination device.
   According to the welding control device, the arc welding can be executed according to the welding condition suitable for reducing the unwelded defect and the target position of the welding torch.
(12) A welding device including:
   the welding control device according to (11); and
   a welding robot configured to execute arc welding.

According to the welding device, the manufactured object can be built while reducing the defects such as the unwelded defect in the narrow portion.

The present application is based on Japanese Patent Application No. 2022-020686 filed on February 14, 2022.

### REFERENCE SIGNS LIST

11: control unit
13: welding robot
27: welding torch
100: welding system
110: welding device
120: welding control device
130: defect determination device
140: learning device
141: data acquisition unit (information acquisition unit)
142: learning unit
143: estimation model unit (estimation model)
151: determination unit
152: welding plan correction unit
B, B1, B2, B3: beads
C: defect (unwelded defect)
H: valley depth
M: filler metal (welding wire)
K: narrow portion
P: base plate (base metal)
U: bottom width
W: opening width
α: torch angle
δ: horizontal distance (difference distance)

## Claims

1. A learning device (140) configured to learn a defect size of an unwelded defect occurring inside an additively manufactured object in which a plurality of beads are stacked in layers on a base metal, and to generate an estimation model that outputs the estimated value of the defect size according to input information, the learning device comprising:
an information acquisition unit (141) configured to acquire information on a welding condition when the beads are deposited, a dimension related to a narrow portion forming a valley portion in a surface shape of the additively manufactured object before the beads are deposited, a positional relation between the narrow portion and a target position of the bead, and the defect size of the unwelded defect; and
a learning unit (142) configured to generate the estimation model by learning a relation between the welding condition, the dimension related to the narrow portion and the positional relation, and the defect size, wherein
the dimension related to the narrow portion includes at least one of a bottom width of the valley portion, an opening width representing an interval between top portions on both sides of the valley portion, both sides constituting the valley portion, and a valley depth from the top portion to a bottom of the valley portion.

2. The learning device according to claim 1, wherein
the welding condition includes at least one of a feeding speed of a welding wire, a travel speed, a welding current, a welding voltage, a torch angle of a welding torch, a volume of the bead, and a cross-sectional area of a cross section orthogonal to a longitudinal direction of the bead.

3. The learning device according to claim 1 or 2, wherein
the positional relation includes a difference distance between a representative position of the narrow portion and a target position of the bead to be formed next.

4. The learning device according to any one of claims 1 to 3, wherein
the defect size includes the cross-sectional area or a length of the cross section orthogonal to the longitudinal direction of the bead.

5. The learning device according to any one of claims 1 to 4, wherein
the learning unit registers, in the estimation model, a variance of the defect size in addition to the welding condition, the dimension related to the narrow portion, and the defect size corresponding to the positional relation, and
the estimation model is capable of outputting the defect size and a variance value thereof corresponding to the input information, according to the input information.

6. A defect determination device (130) comprising:
the learning device according to any one of claims 1 to 5; and
a determination unit (151) configured to input, to the estimation model, information on a welding plan including at least dimensional information on the narrow portion and the positional relation, and to compare an estimated value of the defect size of the unwelded defect output from the estimation model with a reference value serving as a predetermined allowable limit.

7. The defect determination device according to claim 6, further comprising:
a welding plan correction unit (152) configured to create a corrected welding plan by correcting at least one of the welding condition and the positional relation when the determination unit determines that the estimated value exceeds the reference value, wherein
the welding plan correction unit repeats the correction of the welding plan until the estimated value of the defect size according to information on the corrected welding plan output from the estimation model becomes equal to or less than the reference value.

8. A computer-implemented learning method that learns a defect size of an unwelded defect occurring inside an additively manufactured object in which a plurality of beads are stacked in layers on a base metal, and generates an estimation model that outputs the defect size according to input information, the learning method comprising:
a step of acquiring information on a welding condition when the beads are deposited, a dimension related to a narrow portion forming a valley portion in a surface shape of the additively manufactured object before the beads are deposited, a positional relation between the narrow portion and a target position of the bead, and the defect size of the unwelded defect; and
a step of generating the estimation model by learning a relation between the welding condition, the dimension related to the narrow portion and the positional relation, and the defect size, wherein
the dimension related to the narrow portion includes at least one of a bottom width of the valley portion, an opening width representing an interval between top portions on both sides of the valley portion, both sides constituting the valley portion, and a valley depth from the top portion to a bottom of the valley portion.

9. A defect determination method, comprising:
inputting, to the estimation model generated by using the learning method according to claim 8, information on a welding plan including at least dimensional information on the narrow portion and the positional relation;
comparing an estimated value of a defect size of the unwelded defect output from the estimation model with a reference value serving as a predetermined allowable limit; and
determining that the unwelded defect occurs when the estimated value exceeds the reference value.

10. The defect determination method according to claim 9, further comprising:
creating a corrected welding plan by correcting at least one of the welding condition and the positional relation when it is determined that the estimated value exceeds the reference value;
inputting the corrected welding plan to the estimation model; and
repeating the correction of the welding plan until the estimated value of the defect size according to information on the corrected welding plan output from the estimation model becomes equal to or less than the reference value.

11. A welding control device (120) comprising:
the defect determination device (130) according to claim 6 or 7; and
a control unit (11) configured to execute arc welding according to a result output from the defect determination device.

12. A welding device (110) comprising
the welding control device (120) according to claim 11; and
a welding robot (13) configured to execute arc welding

## Patentansprüche

1. Lernvorrichtung (140), die eingerichtet ist, eine Defektgröße eines nicht verschweißten Defekts zu erlernen, der innerhalb eines additiv gefertigten Objekts auftritt, in dem eine Mehrzahl von Perlen in Schichten auf einem Grundmetall gestapelt sind, und ein Schätzmodell zu erzeugen, das den geschätzten Wert der Defektgröße nach den eingegebenen Informationen ausgibt, wobei die Lernvorrichtung umfasst:
eine Informationserfassungseinheit (141), die eingerichtet ist, Informationen zu erfassen über eine Schweißbedingung, wenn die Perlen aufgebracht werden, eine Abmessung, die sich auf einen schmalen Abschnitt bezieht, der einen Talabschnitt in einer Oberflächenform des additiv gefertigten Objekts bildet, bevor die Perlen aufgebracht werden, eine Positionsbeziehung zwischen dem schmalen Abschnitt und einer Zielposition der Perle und die Defektgröße des nicht verschweißten Defekts; und
eine Lerneinheit (142), die eingerichtet ist, dass sie das Schätzmodell durch Erlernen einer Beziehung zwischen der Schweißbedingung, der Abmessung, die sich auf den schmalen Abschnitt und die Positionsbeziehung bezieht, und der Defektgröße erzeugt, wobei
die Abmessung, die sich auf den schmalen Abschnitt bezieht, mindestens eine von einer Bodenbreite des Talabschnitts, einer Öffnungsbreite, die einen Abstand zwischen oberen Abschnitten auf beiden Seiten des Talabschnitts darstellt, wobei beide Seiten den Talabschnitt bilden, und einer Taltiefe vom oberen Abschnitt bis zum Boden des Talabschnitts enthält.

2. Lernvorrichtung nach Anspruch 1, wobei
die Schweißbedingung mindestens eine von einer Vorschubgeschwindigkeit eines Schweißdrahtes, einer Fahrgeschwindigkeit, einem Schweißstrom, einer Schweißspannung, einem Brennerwinkel eines Schweißbrenners, einem Volumen der Perle und einer Querschnittsfläche eines Querschnitts orthogonal zur Längsrichtung der Perle enthält.

3. Lernvorrichtung nach Anspruch 1 oder 2, wobei
die Positionsbeziehung einen Differenzabstand zwischen einer repräsentativen Position des schmalen Abschnitts und einer Zielposition der als nächstes zu bildenden Perle enthält.

4. Lernvorrichtung nach einem der Ansprüche 1 bis 3, wobei
die Defektgröße die Querschnittsfläche oder eine Länge des Querschnitts orthogonal zur Längsrichtung der Perle enthält.

5. Lernvorrichtung nach einem der Ansprüche 1 bis 4, wobei
die Lerneinheit zusätzlich zu der Schweißbedingung, der Abmessung, die sich auf den schmalen Abschnitt bezieht, und der Defektgröße entsprechend der Positionsbeziehung eine Varianz der Defektgröße im Schätzmodell registriert und das Schätzmodell in der Lage ist, die Defektgröße und einen Varianzwert davon entsprechend den eingegebenen Informationen auszugeben.

6. Defektermittlungsvorrichtung (130), umfassend:
die Lernvorrichtung nach einem der Ansprüche 1 bis 5; und
eine Ermittlungseinheit (151), die eingerichtet ist, dass sie Informationen über einen Schweißplan, einschließlich mindestens der Abmessungsinformationen über den schmalen Abschnitt und die Positionsbeziehung, in das Schätzmodell eingibt und einen geschätzten Wert der Defektgröße des nicht verschweißten Defekts, der vom Schätzmodell ausgegeben wird, mit einem Referenzwert vergleicht, der als vorermittelte zulässige Grenze dient.

7. Defektermittlungsvorrichtung nach Anspruch 6, weiter umfassend:
eine Schweißplankorrektureinheit (152), die eingerichtet ist, dass sie einen korrigierten Schweißplan erstellt, indem sie mindestens eine von der Schweißbedingung und der Positionsbeziehung korrigiert, wenn die Ermittlungseinheit feststellt, dass der geschätzte Wert den Referenzwert überschreitet, wobei
die Schweißplankorrektureinheit die Korrektur des Schweißplans so lange wiederholt, bis der geschätzte Wert der Defektgröße nach den Informationen über den korrigierten Schweißplan, der vom Schätzmodell ausgegeben wird, gleich oder kleiner als der Referenzwert ist.

8. Computerimplementiertes Lernverfahren, das eine Defektgröße eines nicht verschweißten Defekts erlernt, der innerhalb eines additiv gefertigten Objekts auftritt, in dem eine Mehrzahl von Perlen in Schichten auf einem Grundmetall gestapelt sind, und ein Schätzmodell erzeugt, das die Defektgröße nach den eingegebenen Informationen ausgibt, wobei das Lernverfahren umfasst:
einen Schritt des Erfassens von Informationen über eine Schweißbedingung, wenn die Perlen aufgebracht werden, eine Abmessung, die sich auf einen schmalen Abschnitt bezieht, der einen Talabschnitt in einer Oberflächenform des additiv gefertigten Objekts bildet, bevor die Perlen aufgebracht werden, eine Positionsbeziehung zwischen dem schmalen Abschnitt und einer Zielposition der Perle und die Defektgröße des nicht verschweißten Defekts; und
einen Schritt des Erzeugens des Schätzmodells durch Erlernen einer Beziehung zwischen der Schweißbedingung, der Abmessung, die sich auf den schmalen Abschnitt und die Positionsbeziehung bezieht, und der Defektgröße, wobei
die Abmessung, die sich auf den schmalen Abschnitt bezieht, mindestens eine von einer Bodenbreite des Talabschnitts, einer Öffnungsbreite, die einen Abstand zwischen oberen Abschnitten auf beiden Seiten des Talabschnitts darstellt, wobei beide Seiten den Talabschnitt bilden, und einer Taltiefe vom oberen Abschnitt bis zum Boden des Talabschnitts enthält.

9. Verfahren zur Defektermittlung, umfassend:
das Eingeben von Informationen zu einem Schweißplan, der mindestens Abmessungsinformationen zu dem schmalen Abschnitt und der Positionsbeziehung enthält, in das unter Verwendung des Lernverfahrens nach Anspruch 8 erzeugte Schätzmodell;
das Vergleichen eines geschätzten Wertes einer Defektgröße des nicht verschweißten Defekts, der von dem Schätzmodell ausgegeben wird, mit einem Referenzwert, der als vorermittelte zulässige Grenze dient; und
das Feststellen, dass der nicht verschweißte Defekt auftritt, wenn der geschätzte Wert den Referenzwert überschreitet.

10. Verfahren zur Defektermittlung nach Anspruch 9, weiter umfassend:
das Erstellen eines korrigierten Schweißplans, in dem mindestens eine von der Schweißbedingung und der Positionsbeziehung korrigiert wird, wenn festgestellt wird, dass der geschätzte Wert den Referenzwert überschreitet;
das Eingeben des korrigierten Schweißplans in das Schätzmodell; und
das Wiederholen der Korrektur des Schweißplans, bis der geschätzte Wert der Defektgröße nach den Informationen über den korrigierten Schweißplan, der aus dem Schätzmodell ausgegeben wird, gleich oder kleiner als der Referenzwert wird.

11. Schweißsteuerungsvorrichtung (120), umfassend:
die Defektermittlungsvorrichtung (130) nach Anspruch 6 oder 7; und
eine Steuereinheit (11), die eingerichtet ist, dass sie das Lichtbogenschweißen nach einem von der Defektermittlungsvorrichtung ausgegebenen Ergebnis ausführt.

12. Schweißvorrichtung (110), umfassend:
die Schweißsteuerungsvorrichtung (120) nach Anspruch 11; und
einen Schweißroboter (13), der eingerichtet t, dass er das Lichtbogenschweißen ausführt.

## Revendications

1. Dispositif d'apprentissage (140) configuré pour apprendre une taille de défaut d'un défaut non soudé se produisant à l'intérieur d'un objet fabriqué de manière additive dans lequel une pluralité de cordons sont empilés en couches sur un métal de base et pour générer un modèle d'estimation qui sort la valeur estimée de la taille de défaut en fonction d'informations saisies, le dispositif d'apprentissage comprenant :
un module d'acquisition d'informations (141) configuré pour acquérir des informations sur une condition de soudage lorsque les cordons sont déposés, une dimension liée à une portion étroite formant une portion de creux dans une forme de surface de l'objet fabriqué de manière additive avant que les cordons ne soient déposés, une relation positionnelle entre la portion étroite et une position cible du cordon, et la taille de défaut du défaut non soudé ; et
un module d'apprentissage (142) configuré pour générer le modèle d'estimation en apprenant une relation entre la condition de soudage, la dimensionnée liée à la portion étroite et la relation positionnelle, et la taille de défaut, dans lequel
la dimension liée à la portion étroite inclut au moins une d'une largeur de fond de la portion de creux, d'une largeur d'ouverture représentant un intervalle entre des portions supérieures sur les deux côtés de la portion de creux, les deux côtés constituant la portion de creux, et d'une profondeur de creux de la portion supérieure à un fond de la portion de creux.

2. Dispositif d'apprentissage selon la revendication 1, dans lequel
la condition de soudage inclut au moins un élément parmi une vitesse d'alimentation d'un fil à souder, une vitesse de déplacement, un courant de soudage, une tension de soudage, un angle de chalumeau d'un chalumeau de soudage, un volume du cordon et une section transversale d'une section orthogonale à une direction longitudinale du cordon.

3. Dispositif d'apprentissage selon la revendication 1 ou 2, dans lequel
la relation positionnelle inclut une différence entre une position représentative de la portion étroite et une position cible du cordon devant être le prochain formé.

4. Dispositif d'apprentissage selon l'une quelconque des revendications 1 à 3, dans lequel
la taille de défaut inclut la section transversale ou une longueur de la section orthogonale à la direction longitudinale du cordon.

5. Dispositif d'apprentissage selon l'une quelconque des revendications 1 à 4, dans lequel
le module d'apprentissage enregistre, dans le modèle d'estimation, une variance de la taille de défaut outre la condition de soudage, la dimension liée à la portion étroite, et la taille de défaut correspondant à la relation positionnelle, et
le modèle d'estimation est capable de sortir la taille de défaut et une valeur de variance de celle-ci correspondant aux informations saisies, en fonction des informations saisies.

6. Dispositif de détermination de défaut (130) comprenant :
le dispositif d'apprentissage selon l'une quelconque des revendications 1 à 5 ; et
un module de détermination (151) configuré pour saisir, à destination du modèle d'estimation, des informations sur un plan de soudage incluant au moins des informations dimensionnelles sur la portion étroite et la relation positionnelle, et pour comparer une valeur estimée de la taille de défaut du défaut non soudé sortie du modèle d'estimation à une valeur de référence servant de limite permissible prédéterminée.

7. Dispositif de détermination de défaut selon la revendication 6, comprenant en outre :
un module de correction de plan de soudage (152) configuré pour créer un plan de soudage corrigé en corrigeant au moins une de la condition de soudage et la relation positionnelle lorsque le module de détermination détermine que la valeur estimée dépasse la valeur de référence, dans lequel
le module de correction de plan de soudage répète la correction du plan de soudage jusqu'à ce que la valeur estimée de la taille de défaut en fonction d'informations sur le plan de soudage corrigé sortie du modèle d'estimation devienne inférieure ou égale à la valeur de référence.

8. Procédé d'apprentissage mis en œuvre par ordinateur qui apprend une taille de défaut d'un défaut non soudé se produisant à l'intérieur d'un objet fabriqué de manière additive dans lequel une pluralité de cordons sont empilés en couches sur un métal de base et génère un modèle d'estimation qui sort la taille de défaut en fonction d'informations saisies, le procédé d'apprentissage comprenant :
une étape d'acquisition d'informations sur une condition de soudage lorsque les cordons sont déposés, une dimension liée à une portion étroite formant une portion de creux dans une forme de surface de l'objet fabriqué de manière additive avant que les cordons ne soient déposés, une relation positionnelle entre la portion étroite et une position cible du cordon, et la taille de défaut du défaut non soudé ; et
une étape de génération du modèle d'estimation en apprenant une relation entre la condition de soudage, la dimensionnée liée à la portion étroite et la relation positionnelle, et la taille de défaut, dans lequel
la dimension liée à la portion étroite inclut au moins une d'une largeur de fond de la portion de creux, d'une largeur d'ouverture représentant un intervalle entre des portions supérieures sur les deux côtés de la portion de creux, les deux côtés constituant la portion de creux, et d'une profondeur de creux de la portion supérieure à un fond de la portion de creux.

9. Procédé de détermination de défaut, comprenant :
saisir, à destination du modèle d'estimation généré en utilisant le procédé d'apprentissage selon la revendication 8, des informations sur un plan de soudage incluant au moins des informations dimensionnelles sur la portion étroite et la relation positionnelle ;
comparer une valeur estimée d'une taille de défaut du défaut non soudé sortie du modèle d'estimation à une valeur de référence servant de limite permissible prédéterminée ; et
déterminer que le défaut non soudé se produit lorsque la valeur estimée dépasse la valeur de référence.

10. Procédé de détermination de défaut selon la revendication 9, comprenant en outre :
créer un plan de soudage corrigé en corrigeant au moins une de la condition de soudage et la relation positionnelle lorsqu'il est déterminé que la valeur estimée dépasse la valeur de référence ;
saisir le plan de soudage corrigé à destination du modèle d'estimation ; et
répéter la correction du plan de soudage jusqu'à ce que la valeur estimée de la taille de défaut en fonction d'informations sur le plan de soudage corrigé sortie du modèle d'estimation devienne inférieure ou égale à la valeur de référence.

11. Dispositif de commande de soudage (120) comprenant :
le dispositif de détermination de défaut (130) selon la revendication 6 ou 7 ; et
un module de commande (11) configuré pour exécuter un soudage à l'arc en fonction d'un résultat sorti du dispositif de détermination de défaut.

12. Dispositif de soudage (110) comprenant
le dispositif de commande de soudage (120) selon la revendication 11 ; et
un robot de soudage (13) configuré pour exécuter un soudage à l'arc.
